# EUROPÄISCHE PATENTSCHRIFT

(11) **EP 2 643 719 B1**
(45) Veröffentlichungstag und Bekanntmachung des Hinweises auf die Patenterteilung: **16.04.2025**
(21) Anmeldenummer: 11796915.4
(22) Anmeldetag: 22.11.2011
(51) Int. Cl.: G02B 6/036, G02B 6/02

(54) **STRUKTURIERTE DOPPELMANTELFASER**
STRUCTURED DOUBLE-SHEATH FIBER
FIBRE À DOUBLE ENVELOPPE STRUCTURÉE

(30) Priorität: 23.11.2010 EP 10192190
(43) Veröffentlichungstag der Anmeldung: 02.10.2013
(60) Teilanmeldung: 25150645.7
(73) Patentinhaber: Fraunhofer-Gesellschaft zur Förderung der angewandten Forschung e.V., 80686 München (DE); Friedrich-Schiller-Universität Jena, 07743 Jena (DE)
(72) Erfinder: JAUREGUI MISAS, César, 07774 Dornburg-Camburg (DE); STUTZKI, Fabian, 07747 Jena (DE); LIMPERT, Jens, 07751 Jena (DE); JANSEN, Florian, 78054 Villingen-Schwenningen (DE); TÜNNERMANN, Andreas, 99425 Weimar (DE)
(74) Vertreter: Schneiders & Behrendt Bochum
(86) Internationale Anmeldenummer: PCT/EP2011/005880
(87) Internationale Veröffentlichungsnummer: WO 2012/069180

(56) Entgegenhaltungen:
- EP-A1- 1 241 491
- EP-B1- 2 585 863
- WO-A1-01/31376
- WO-A1-2005/109056
- WO-A1-2010/102833
- WO-A1-2011/160646
- US-A1- 2002 164 136
- US-A1- 2008 199 135
- US-B1- 7 142 757
- US-B1- 7 171 091
- JANSEN ET AL.: "Influence of Index Depressions in Active Lareg Pitch Fibers", CONFERENCE ON LASER AND ELECTRO-OPTICS, OPTICAL SOCIETY OF AMERICA, 16- 21 MAY 2010 SAN JOSE, CA, USA, CWC6, 16 May 2010 (2010-05-16), pages 1 - 2, XP009544706
- POLI F ET AL: "Single-Mode Regime in Large-Mode-Area Rare-Earth-Doped Rod-Type PCFs", IEEE JOURNAL OF SELECTED TOPICS IN QUANTUM ELECTRONICS, IEEE SERVICE CENTER, PISCATAWAY, NJ, US, vol. 15, no. 1, 1 January 2009 (2009-01-01), pages 54 - 60, XP011280683, ISSN: 1077-260X, DOI: 10.1109/JSTQE.2008.2010265
- HILDEBRANDT ET AL.: "Single-frequency master-oscillator photonic crystal fiber amplifier with 148 W output power", OPTICS EXPRESS, vol. 24, no. 23, 30 October 2006 (2006-10-30), pages 11071 - 11076, XP002671066

## Beschreibung

Die Erfindung betrifft eine optische Doppelmantelfaser mit einem Kernbereich und einem Mantelbereich, wobei der Mantelbereich einen inneren Bereich und einen äußeren Bereich mit gegenüber dem inneren Bereich und dem Kernbereich geringerem Brechungsindex aufweist, wobei der äußere Bereich den inneren Bereich umgibt, wobei der innere Bereich eine innere Struktur aufweist, die eine räumliche Überlappung von Moden höherer Ordnung mit dem Kernbereich bewirkt, die geringer ist als die räumliche Überlappung einer Grundmode mit dem Kernbereich, wobei die innere Struktur durch im Wesentlichen in Faserlängsrichtung verlaufende Kanäle gebildet wird, wobei das Verhältnis des Durchmessers d der Kanäle zu dem Mittenabstand A benachbarter Kanäle kleiner als 0,5, vorzugsweise kleiner als 0,3, ist, wobei der Mittenabstand A größer als 20 mal der Wellenlänge einer in der Faser propagierenden elektromagnetischen Strahlung ist.

Doppelmantelfasern dieser Art werden in Lasersystemen und dabei insbesondere in Faserlasersystemen verwendet. Hierbei kann das Pumplicht mit geringer Strahlqualität in den Mantelbereich und/oder den Kernbereich der Faser eingekoppelt werden, während das Signallicht mit deutlich höherer Strahlqualität vornehmlich innerhalb des Kernbereiches propagiert.

Die Güte eines jeden Faserlasersystems hängt maßgeblich von der verwendeten Faser ab. Somit wird eine fortwährende Weiterentwicklung der verwendeten Fasern angestrebt, um die bisher bestehenden Limitierungen der im Stand der Technik bekannten Faserlasersysteme auszuräumen. Durch die Einführung der Doppelmanteltechnologie konnte erstmals die hohe Leistung von Pumpdioden niedriger Brillanz (Strahlqualität) genutzt werden. Mittlerweile erreichen kommerziell erhältliche CW-Lasersysteme Ausgangsleistungen von 10 kW.

Durch die Möglichkeit, sowohl das Pumplicht als auch das Signallicht über große Faserlängen zu verstärken, können aktive optische Fasern sehr hohe Effizienzen erreichen. Darüber hinaus besitzen sie hervorragende thermische Eigenschaften und emittieren beugungsbegrenzte Strahlung hoher Qualität unabhängig von der Ausgangsleistung.

Durch die Propagation des Signallichts hoher Intensität in einem relativ kleinen Faserkern über längere Strecken, können sich Probleme durch nichtlineare Effekte ergeben, welche die Qualität des Ausgangsstrahls erheblich beeinträchtigen können. Einige dieser nichtlinearen Effekte sind die Selbstphasenmodulation (SPM), die Raman-Streuung, die Brillouin-Streuung und die Vierwellenmischung (FWM). Diese nichtlinearen Effekte behindern die weitere Erhöhung der Ausgangsleistung wesentlich.

Um das Auftreten nichtlinearer Effekte zu vermeiden, wurden daher unterschiedliche aus dem Stand der Technik bekannte Strategien entwickelt. Die sicher wirkungsvollste Methode ist dabei die Vergrößerung des Kerndurchmessers. Hierdurch wird die Lichtintensität über den Faserquerschnitt reduziert, was unmittelbar dem Auftreten nichtlinearer Effekte entgegenwirkt. Zudem ergibt sich durch einen vergrößerten Kerndurchmesser der Vorteil, dass mehr aktive Ionen eingebracht werden können, wodurch sich die in der Faser gespeicherte Energie erhöht. Hierdurch lässt sich die Länge der notwendigen Absorptionsstrecke innerhalb der Faser reduzieren, was wiederum in einer kürzeren Faser resultiert. Problematisch bei diesem Ansatz ist jedoch, dass ein größerer Kerndurchmesser gleichzeitig dazu führt, dass eine Vielzahl von Moden innerhalb des Faserkerns propagieren kann. Hierdurch verringert sich die Strahlqualität des Lasersystems. Gleichzeitig können Laserinstabilitäten auftreten, welche die Betriebseigenschaften des Lasers erheblich beeinflussen. Daher ist es bei Vergrößerung des Kerndurchmessers stets notwendig, den Einmodenbetrieb innerhalb der Faser sicherzustellen.

Aus dem Stand der Technik sind sogenannte Large Mode Area-Fasern (LMA) mit Kerndurchmessern größer 10 µm bei einer hervorragenden Strahlqualität bekannt. LMA-Fasern können als Stufenindexfasern realisiert werden, dabei ist die numerische Apertur (NA) technisch auf einen Wert von ungefähr 0,06 limitiert. Dies entspricht einem maximalen einmodigen Kerndurchmesser von ungefähr 13 µm. LMA-Stufenindexfasern mit größeren Kerndurchmessern führen damit grundsätzlich mehrere Moden (Multimode-Betrieb). Ein einmodiger Betrieb kann durch gezielte Anregung der Grundmode einer Multimode-Faser erreicht werden. Dieser Ansatz ist beispielsweise in der Druckschrift US 5,818,630 C1 offenbart. Problematisch bei diesem Ansatz ist, dass das Signallicht sehr sorgfältig in die Faser eingekoppelt werden muss, um nur die Grundmode anzuregen. Dies ist in der Praxis jedoch sehr aufwendig und kann bei hohen Leistungen nur noch schwierig erfüllt werden.

Ein weiterer bekannter Ansatz sieht vor, photonische Kristallfasern (PCF) einzusetzen. Diese Fasern besitzen einen aktiv dotierten Faserkern und einen Mantel aus periodisch um diesen Kern angeordneten Luftkanälen. Ein solches Faserdesign offenbart beispielsweise die WO 2006/082348 A9. Sofern die Luftkanäle schmal genug sind und sich in großem radialen Abstand zu dem Faserkern erstrecken, kann eine Führung basierend auf dem effektiven Brechzahlunterschied angenommen werden. Der Vorteil bei diesen Fasern ist, dass der Kanaldurchmesser d und der Mittenabstand A zweier Kanäle die numerische Apertur der Faser beeinflussen. Hierdurch lässt sich die numerische Apertur auf sehr niedrige Werte von ungefähr 0,01 reduzieren. Im Stand der Technik wurden Modenfelddurchmesser von über 50 µm erzielt, die einen effektiv einmodigen Betrieb ermöglichen. Da die photonischen Kristallfasern jedoch keine klare Begrenzung zwischen Kern und Mantel aufweisen, arbeiten sie stets im Multimode-Betrieb. Hieraus ergeben sich wiederum die bekannten Probleme von Modeninstabilitäten und Leistungsschwankungen bei hohen Ausgangsleistungen. Effektiv sind diese Fasern dadurch auf einen Modenfelddurchmesser von ungefähr 80 µm begrenzt.

Die Druckschrift US 7,787,729 B2 offenbart sogenannte Leakage-Channel-Fasern, bei welchen die Luftkanäle innerhalb der Fasern wie ein Modensieb funktionieren, in dem die Moden höherer Ordnung durch ihre geringere Strukturgröße in den Mantel gelangen können und erhöhte Propagationsverluste erfahren, während die Grundmode innerhalb des Faserkerns verbleibt. Dies ermöglicht einen effektiven Einzelmodenbetrieb. Da dieses Konzept jedoch auf einem Energieverlust aus dem Kern in einen Mantel unendlicher Ausdehnung beruht, ist es lediglich für passive oder kerngepumpte Einmantelfasern anwendbar.

Poli, F. et al. ("Single-Mode Regime in Large-Mode-Area Rare-Earth-Doped Rod-Type PCFs", IEEE JOURNAL OF SELECTED TOPICS IN QUANTUM ELECTRONICS, Bd. 15, Nr. 1, Seiten 54 - 60) beschreiben eine strukturierte Doppelmantelfaser, bei der aufgrund der Strukturierung die räumliche Überlappung von Moden höherer Ordnung mit dem Kernbereich geringer ist als die räumliche Überlappung der Grundmoden mit dem Kernbereich.

US 2008/199135 A1 und WO 01/31376 A1 zeigen weitere Designs von strukturierten Doppelmantelfasern.

Es ist vor diesem Hintergrund Aufgabe der Erfindung, eine Doppelmantelfaser der eingangs angegebenen Art zu schaffen, welche effektiv im Einzelmodenbetrieb arbeitet und durch ihre Skalierbarkeit die Entstehung nichtlinearer Effekte auch bei hohen Intensitäten des geführten Laserlichtes vermeidet.

Diese Aufgabe löst die Erfindung dadurch, dass der Durchmesser des äußeren Bereichs so gewählt ist, dass die Grundmode eine um wenigstens 25% größere räumliche Überlappung mit dem Kernbereich aufweist als alle anderen Moden der in der Doppelmantelfaser propagierenden elektromagnetischen Strahlung, wobei die innere Struktur aus zwei konzentrischen Ringen aus hexagonal angeordneten Kanälen besteht, wobei der Kernbereich durch das Fehlen eines Kanals gebildet ist.

Die erfindungsgemäße Doppelmantelfaser arbeitet grundsätzlich im Multimode-Betrieb, weil sie eine Doppelmantelstruktur aufweist und im Gegensatz zur Leakage-Channel-Faser keine unterschiedlichen Propagationsverluste für verschiedene Moden verursacht. Der effektiv einmodige Betrieb in einem aktiven Lasersystem kann durch zwei Eigenschaften begründet werden. Bereits während der Einkopplung des Signalstrahls wird die Anregung von Moden höherer Ordnung aufgrund ihrer Delokalisierung erschwert. Hierdurch wird entgegen dem Stand der Technik keine gezielte Einkopplung und Justage zur Anregung nur der Grundmode benötigt. Zusätzlich führt in aktiven Fasern die reduzierte Überlappung der Moden höherer Ordnung mit dem dotierten Kernbereich zu einer wesentlich geringeren Verstärkung gegenüber der im Kernbereich geführten Grundmode.

Gemäß der Erfindung kann die Delokalisierung der Moden höherer Ordnung nicht nur auf den axialen Faserkern, sondern auch auf andere Bereiche der Faser bezogen sein. Diese herausgegriffenen Bereiche, welche ebenfalls einen geringeren Überlapp mit den Moden höherer Ordnung aufweisen können, werden im Sinne der Erfindung ebenfalls als Kernbereich verstanden.

Die erfindungsgemäße strukturierte Doppelmantelfaser unterstützt typischerweise mehrere hundert Moden. In einer Doppelmantelfaser propagieren grundsätzlich alle Moden ohne nennenswerte Verluste, da im theoretischen Idealfall keine Modenkopplung stattfinden kann. Dadurch, dass keine geschlossene Grenze zwischen Kernbereich und Mantelbereich existiert, können die Moden beider Bereiche nicht klar voneinander getrennt werden. Dadurch sind auch die Moden des Kernbereichs unmittelbar Moden der gesamten Faser, wobei jedoch der größte Teil ihrer Energie im Kernbereich der Faser konzentriert ist. Im Gegensatz zu Stufenindexfasern weist die Grundmode innerhalb der strukturierten Doppelmantelfaser nicht immer den höchsten effektiven Brechungsindex auf. Auch die effektiven Brechungsindizes von Kernmoden höherer Ordnung können mit den Mantelmoden vermischt sein. Somit müssen Ausdrücke wie "Moden des Kernbereichs" und "Moden des Mantelbereichs" anhand der Lokalisierung definiert werden, da diese vornehmlich innerhalb des Kernbereichs bzw. des Mantelbereichs propagieren. Diese Durchmischung der effektiven Indizes von Kern- und Mantelmoden kann zu einem Avoided-Crossing zwischen Moden führen und dabei zu einer starken Deformierung beziehungsweise Delokalisierung genutzt werden.

Gemäß der Erfindung kann die Doppelmantelfaser zumindest teilweise, insbesondere im Kernbereich, mit Seltenerdionen dotiert sein. Ebenfalls kann sie so ausgestaltet sein, dass sie polarisationserhaltend ist oder die Polarisation gezielt verändert. Dotierung mit entsprechenden Elementen ermöglicht außerdem eine Indexanpassung beziehungsweise -fehlanpassung der Faserbereiche, die wiederum zu einer erhöhten Delokalisierung führen können. Des Weiteren kann die Faser für besondere Anwendungen mechanisch steif oder besonders flexibel ausgebildet sein.

Im Sinne der Erfindung kann der Kernbereich durch eine Brechungsindexstufe von den übrigen Bereichen der Faser getrennt sein. Alternativ kann der Kernbereich auch durch einen Indexgradienten definiert sein.

Gemäß der Erfindung ist die innere Struktur durch im Wesentlichen in Faserlängsrichtung verlaufende Kanäle gebildet. Die beschriebenen Eigenschaften der erfindungsgemäßen Delokalisierung sind in den hexagonalen Strukturen der Kanäle dominant ausgeprägt, wobei der Abstand zwischen zwei Kanälen mehr als 20 mal der Wellenlänge des propagierenden Lichtes entspricht. Weiterhin ist das Verhältnis des Durchmessers d der Kanäle zum Mittenabstand A benachbarter Kanäle kleiner als 0,5, vorzugsweise kleiner als 0,3. Der Kernbereich der strukturierten Doppelmantelfaser ist durch das Fehlen mindestens eines Kanals gebildet. Dies ist fertigungstechnisch besonders einfach herzustellen. Diese Ausgestaltung, bei welcher die Durchmesser der Kanäle relativ klein sind gegenüber dem Abstand der Kanäle, hat sich in der Praxis als besonders vorteilhaft herausgestellt.

Eine weitere denkbare Ausführungsform sieht vor, dass die innere Struktur von einem weiteren Bereich umgeben ist, der zur Verstärkung der Delokalisierung oder zur Abschirmung genutzt werden kann. Eine Verstärkung der Delokalisierung kann im einfachsten Fall durch einen unstrukturierten Bereich erzielt werden, der zu einer Interaktion von Moden führen kann, indem er den gleichen oder einen höheren Brechungsindex wie der übrige innere Bereich aufweist. Eine Abschirmung kann beispielsweise durch einen niedrigeren Brechungsindex des zusätzlichen Bereiches im Vergleich zum übrigen inneren Bereich erzielt werden. Diese vorteilhafte Wirkung entsteht dadurch, dass der Bereich mit höherem Brechungsindex, welcher die innere Struktur (z.B. Kanäle) aufweist, als Barriere wirkt, welche effektiv die Faser in zwei Bereiche mit unterschiedlichen Brechungsindizes teilt. Hierdurch wird eine Interaktion zwischen den Moden verschiedener Bereiche verhindert. Auf diese Weise ist es möglich den Durchmesser der äußeren Struktur zu erhöhen, ohne dass die Grundmode eine Interaktion, beispielsweise durch ein Avoided-Crossing, mit anderen Moden erfährt, was zu einem verringerten Überlappen der Grundmode mit dem Kernbereich führen könnte. Dieser zusätzliche Bereich der Abschirmung oder verstärkten Delokalisierung kann auch durch eine gezielte Wahl der Kanalstruktur hervorgerufen werden, beispielsweise zusätzliche Ringe mit besonders dicht angeordneten Kanälen oder erhöhter Kanalgröße. Auf diese Weise kann vorrangig die äußere Struktur die Delokalisierung der Moden höherer Ordnung aus dem Kernbereich bewirken, oder die Wirkung der inneren Struktur unterstützen.

Die erfindungsgemäße strukturierte Doppelmantelfaser ist insbesondere für den Einsatz in Faserlasersystemen geeignet, bei welchen Laserlicht mit hoher Intensität geführt und verstärkt werden soll. In diesem Sinne sollen in die Erfindung ausdrücklich die Lasersysteme mit einbezogen sein, welche eine erfindungsgemäße Doppelmantelfaser verwenden.

Ausführungsbeispiele der Erfindung werden im Folgenden anhand der Figuren näher erläutert. Es zeigen:
- Figur 1:: Querschnittdarstellung einer Ausführungsvariante einer erfindungsgemäßen Doppelmantelfaser;
- Figur 2:: Darstellung der Grundmode und vier verschiedener Moden höherer Ordnung innerhalb der Doppelmantelfaser gemäß Figur 1;
- Figur 3:: Darstellungen der Grundmode und vier verschiedener Moden höherer Ordnung innerhalb einer Doppelmantelfaser gemäß Figur 1 mit einem erhöhten Durchmesser des äußeren Bereichs;
- Figur 4:: Variante mit spiralförmiger Anordnung von Kanälen (kein Ausführungsbeispiel der Erfindung);
- Figur 5:: Darstellungen der Grundmode und zweier Moden höherer Ordnung innerhalb der Doppelmantelfaser gemäß Figur 4;
- Figur 6:: eine weitere Ausführungsvariante mit einer Anordnung der inneren Struktur in einem Bereich der Faser mit von den übrigen Bereichen abweichendem Brechungsindex;
- Figur 7:: Darstellungen der Grundmode und vier verschiedener Moden höherer Ordnung innerhalb der Doppelmantelfaser gemäß Figur 6.

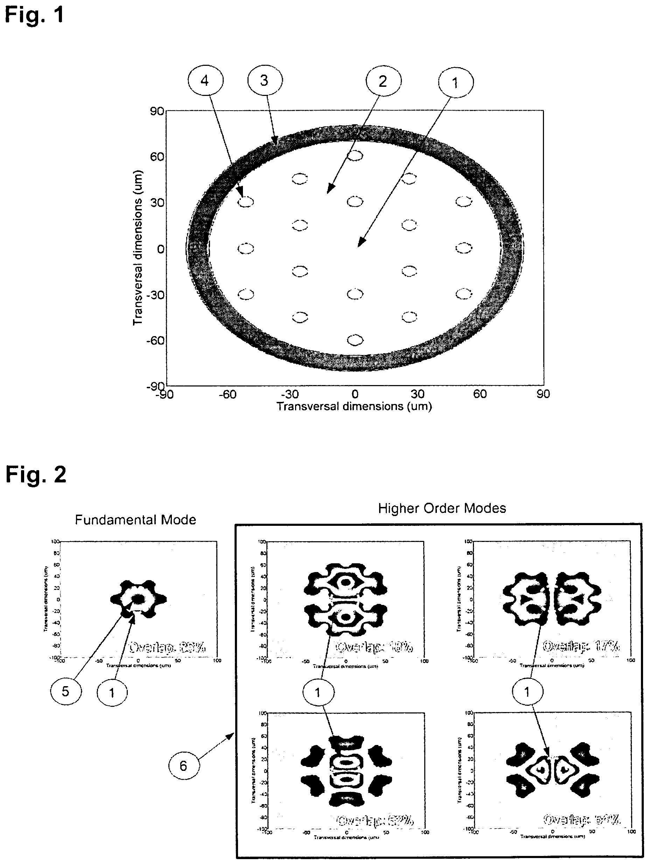

Figur 1 zeigt eine Doppelmantelfaser im Querschnitt mit einem Kernbereich 1 und einem inneren Bereich 2. Der innere Bereich weist eine innere Struktur 4 auf und wird durch einen äußeren Bereich 3 begrenzt. In diesem Beispiel wird die innere Struktur 2 über zur Faserachse parallele Kanäle gebildet, welche einen von dem Brechungsindex des Kernbereichs 1 verschiedenen Brechungsindex aufweisen.

Eine Doppelmantelfaser kann prinzipiell als normale Stufenindexfaser betrachtet werden, welche einen sehr großen Kern aufweist. Der Kern dieser äquivalenten Stufenindexfaser erstreckt sich dabei über den kompletten inneren Bereich 2 und den Kernbereich 1 und wird vom äußeren Bereich 3 als Mantel der Stufenindexfaser umgeben. Die lokale Verteilung der Moden innerhalb einer solchen unstrukturierten Stufenindexfaser mit großem Durchmesser ist nahezu homogen, wodurch jeder Bereich des Faserkerns im Durchschnitt von einer gleichen Anzahl Moden 5, 6 durchsetzt ist. Eine erfindungsgemäße Delokalisierung von Moden 5, 6 findet in einer solchen Stufenindexfaser nicht statt.

Wenn jedoch, wie gemäß der Figur 1, der Faserkern von einer inneren Struktur 4 umgeben ist, ist es möglich, einige Moden 6 aus dem Kernbereich 1 zu delokalisieren und andere Moden 5 (Grundmode) innerhalb des Kernbereichs 1 zu konzentrieren. Die hexagonale Anordnung der Kanäle 4 innerhalb der Doppelmantelfaser ist so ausgelegt, dass die Moden höherer Ordnung 6 aus dem Kernbereich 1 delokalisiert werden, während nur die gewünschte Grundmode 5 innerhalb des Kernbereichs 1 verbleibt. Dies resultiert in einer guten Überlappung der Grundmode 5 mit dem Kernbereich 1 und reduziert gleichzeitig die Überlappung der Moden höherer Ordnung 6 mit dem Kernbereich 1. Im Falle einer passiven Faser führt dies zu einer geringer ausgeprägten Anregbarkeit der Moden höherer Ordnung 6 innerhalb des Kernbereichs 1. In einer aktiven Faser weist diese Ausgestaltung zusätzlich eine reduzierte Überlappung mit dem dotierten Bereich und dadurch eine geringere Verstärkung der Moden höherer Ordnung 6 auf. Somit zeigt die Doppelmantelfaser ein effektiv einmodiges Verhalten.

Gemäß Figur 1 verfügt die strukturierte Doppelmantelfaser über eine hexagonale Anordnung von Luftkanälen 4, welche einen Mittenabstand A aufweisen, welcher im Verhältnis zu dem Kanaldurchmesser d geringer als 0,5 ist. Speziell besitzt die Faser gemäß Figur 1 zwei konzentrische Ringe aus Luftkanälen 4, welche einen Mittenabstand von 30 µm und ein Verhältnis d:A=0,22 aufweisen. Der äußere Bereich 3 des Mantelbereichs der Faser hat einen Durchmesser von 150 µm.

Figur 2 zeigt verschiedene Moden 5, 6 der Doppelmantelfaser gemäß Figur 1, welche eine unterschiedliche Überlappung mit dem Kernbereich 1 aufweisen. Der Kernbereich 1 ist dabei als gestrichelter Kreis dargestellt. Wie zu sehen ist, hat die gaußförmige Grundmode 5 die größte Überlappung mit dem Kernbereich 1, nämlich ungefähr 85 %. Dadurch wird der größte Teil der Energie des eingekoppelten Strahls in dieser Mode 5 propagieren. Die Moden höherer Ordnung 6 haben eine Überlappung mit dem Kernbereich 1, welche in jedem Fall geringer als 55 % ist. Im Gegensatz zu einer gewöhnlichen LMA-Stufenindexfaser ist die Überlappung der Moden höherer Ordnung 6 bei der Doppelmantelfaser wesentlich geringer. In der Stufenindexfaser würde der Anteil der Moden höherer Ordnung 6 innerhalb des Kernbereichs 1 nicht wesentlich geringer sein als die Grundmode 5. Falls die erfindungsgemäße Doppelmantelfaser gleichzeitig im Kernbereich 1 mit Seltenerdionen dotiert ist, haben die Moden höherer Ordnung 6 eine entsprechend geringe Überlappung mit der aktiven Region des Kernbereichs 1. Wenn die Moden innerhalb der Faser propagieren, sind sie unterschiedlichen Verstärkungsverhältnissen ausgesetzt, wodurch sie am Ausgang der Faser einen entsprechend geringeren Anteil an Moden höherer Ordnung 6 aufweisen. Obwohl der letztgenannte Effekt in aktiven Fasern eine wichtige Rolle spielt, ist er nicht notwendige Voraussetzung für die Erfindung. Da die reduzierte Überlappung der Moden höherer Ordnung 6 mit dem Kernbereich 1 der Faser unabhängig von einer etwaigen Dotierung vorhanden ist, ist die Delokalisierung der Moden höherer Ordnung 6 direkt vom Zeitpunkt des Eintritts des Pumplichtes in die Faser gegeben, da die Moden höherer Ordnung 6 nicht effizient angeregt werden können.

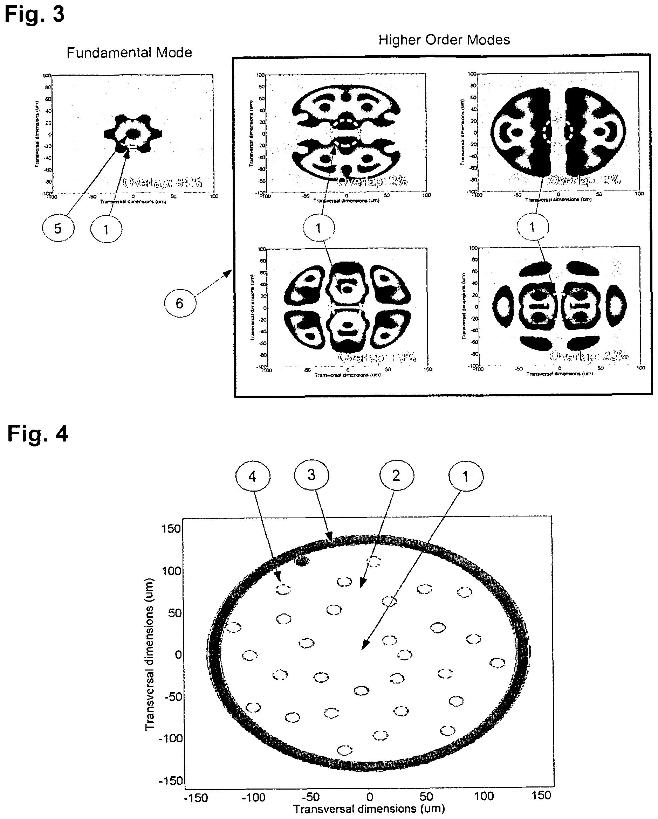

Figur 3 zeigt die Darstellungen der Grundmode 5 sowie vier verschiedener Moden höherer Ordnung 6 innerhalb einer Doppelmantelfaser mit einem erhöhten Durchmesser des äußeren Bereichs 3. Die Anordnung der Kanäle 4 innerhalb der inneren Struktur 2 ist die gleiche wie in der Anordnung gemäß Figur 2. Lediglich der Durchmesser des äußeren Bereichs 3 ist vergrößert und beträgt beispielsweise 181 µm. Durch die Vergrößerung des Durchmessers des äußeren Bereichs 3 wird der Effekt des Avoided-Crossings ausgenutzt Dieser Effekt tritt vorrangig in strukturierten Doppelmantelfasern auf und kann durch angemessene Wahl des Durchmessers des äußeren Bereichs 3 reguliert werden. Im gegebenen Ausführungsbeispiel gemäß Figur 3 kommt es bei einem Durchmesser des äußeren Bereichs 3 von 181 µm dazu, dass die effektiven Brechungsindizes zweier Moden höherer Ordnung 6 sehr nah beieinander liegen. Dies führt zu einer Wechselwirkung der beiden Moden 6 mit starker Deformation, wie in Figur 3 dargestellt. Die Überlappung der Grundmode 5 mit dem Kernbereich 1 bleibt dabei annähernd unverändert bei ungefähr 84 %, während die Überlappung der Moden höherer Ordnung 6 nun mit weniger als 25 % wesentlich geringer ist als bei der ersten Ausführungsvariante gemäß den Figuren 1 bzw. 2.

Figur 4 zeigt eine Variante, die kein Ausführungsbeispiel der Erfindung ist, mit spiralförmiger Anordnung der Kanäle 4. Diese asymmetrische Anordnung der Luftkanäle 4 - oder auch alternative Anordnungen mit einer reduzierten Anzahl von Symmetrieachsen - führt ebenfalls zu einer starken Delokalisierung der Moden höherer Ordnung 6 aus dem Kernbereich 1. Die spiralförmige Anordnung der Kanäle 4 weist zwar keine Symmetrieachsen auf, jedoch besitzt sie ausreichend Ähnlichkeit zu einer symmetrischen Anordnung, so dass die Führung der lokalisierten Grundmode 5 gewährleistet werden kann.

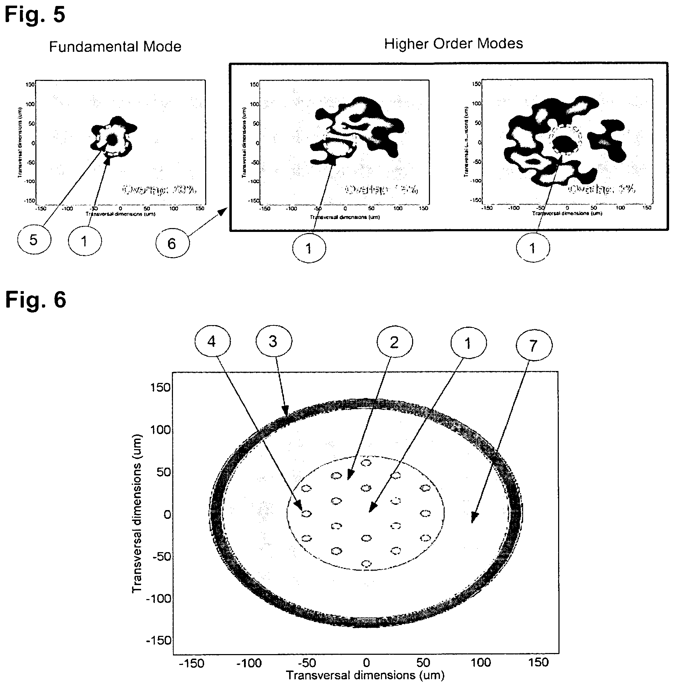

Figur 5 zeigt die Überlappung der Grundmode 5 mit dem Kernbereich 1 in einer Größenordnung von 76 %, während die Überlappung der Moden höherer Ordnung 6 weniger als 15 % beträgt.

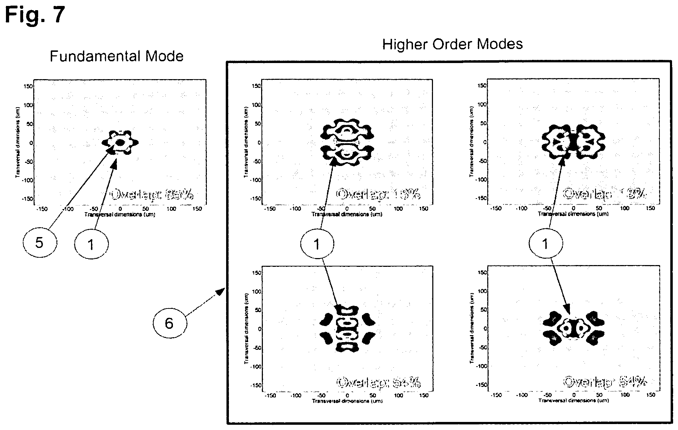

Figur 6 zeigt eine Doppelmantelfaser mit einer Abschirmung der inneren Struktur 2. In dieser Ausführung wurde die Abschirmung durch einen abweichenden Brechungsindex in einem Bereich 7 realisiert. Sofern dieser Brechungsindex größer ist als der Brechungsindex der Umgebung, ist es möglich den Durchmesser des äußeren Bereichs 3 zu erhöhen, ohne dass die Grundmode 5 ein Avoided-Crossing mit einer anderen Mode erfährt. Dies kommt daher, dass der Bereich 7 des höheren Brechungsindexes, welcher die Kanäle 4 aufweist, wie eine Barriere wirkt, die die Faser in zwei Bereiche mit unterschiedlichen effektiven Brechungsindizes teilt. Somit werden auch die propagierenden Moden in zwei separate Gruppen mit verschiedenen Brechungsindizes aufgeteilt, was zu einer Verhinderung des Avoided-Crossings zwischen Moden aus verschiedenen Gruppen führt. Wie in Figur 6 dargestellt, umgibt der Bereich 7 höheren Brechungsindexes die innere Struktur 2 von Kanälen 4 vollständig. Daher ergibt sich im Vergleich mit der Anordnung gemäß Figur 1 kein Einfluss auf die Gestalt der Moden oder die Überlappung mit dem Kernbereich 1. Dies führt gemäß Figur 7 zu einer Überlappung der Grundmode 5 mit dem Kernbereich 1 von ungefähr 85 %, während die Moden höherer Ordnung 6 eine Überlappung von maximal 54 % aufweisen.

Als Alternative zu Figur 7 ist es ebenso denkbar, dass der Bereich 7 höheren Brechungsindexes, welcher die Luftkanäle 4 beinhaltet, von einer zweiten Anordnung dichter angeordneter Luftkanäle 4 umschlossen ist. Dies führt zu einer gleichwertigen Abschirmung der Moden gemäß der Darstellung in Figur 7. Grundsätzlich kann die Abschirmung der Moden innerhalb der inneren Struktur 2 durch jedwede Ausgestaltung und geometrische Form der Anordnung der Luftkanäle 4 erfolgen.

## Patentansprüche

1. Doppelmantelfaser mit einem Kernbereich (1) und einem Mantelbereich, wobei der Mantelbereich einen inneren Bereich (2) und einen äußeren Bereich (3) mit gegenüber dem inneren Bereich (2) und dem Kernbereich (1) geringerem Brechungsindex aufweist, wobei der äußere Bereich (3) den inneren Bereich (2) umgibt, wobei der innere Bereich (2) eine innere Struktur (4) aufweist, die eine räumliche Überlappung von Moden höherer Ordnung mit dem Kernbereich (1) bewirkt, die geringer ist als die räumliche Überlappung einer Grundmode mit dem Kernbereich (1), wobei die innere Struktur (4) durch im Wesentlichen in Faserlängsrichtung verlaufende Kanäle gebildet wird, wobei das Verhältnis des Durchmessers d der Kanäle zu dem Mittenabstand A benachbarter Kanäle kleiner als 0,5, vorzugsweise kleiner als 0,3, ist, wobei der Mittenabstand A größer als 20 mal der Wellenlänge einer in der Faser propagierenden elektromagnetischen Strahlung ist, wobei der Durchmesser (3) des äußeren Bereichs so gewählt ist, dass die Grundmode eine um wenigstens 25% größere räumliche Überlappung mit dem Kernbereich (1) aufweist als alle anderen Moden der in der Doppelmantelfaser propagierenden elektromagnetischen Strahlung, **dadurch gekennzeichnet, dass** die innere Struktur (4) aus zwei konzentrischen Ringen aus hexagonal angeordneten Kanälen besteht, wobei der Kernbereich (1) durch das Fehlen eines Kanals gebildet ist.

2. Doppelmantelfaser nach Anspruch 1, **dadurch gekennzeichnet, dass** der Kernbereich (1) mit Seltenerden dotiert ist.

3. Verwendung einer Doppelmantelfaser nach Anspruch 1 oder 2 in einem Lasersystem, insbesondere in einem Faserlasersystem.

4. Lasersystem, insbesondere Faserlasersystem, aufweisend eine Doppelmantelfaser nach Anspruch 1 oder 2.

## Claims

1. Double-sheath fibre having a core region (1) and a sheath region, wherein the sheath region has an inner region (2) and an outer region (3) with a refractive index that is lower with respect to that of the inner region (2) and the core region (1), wherein the outer region (3) surrounds the inner region (2), wherein the inner region (2) has an inner structure (4) that effects a spatial overlap of modes of higher order with the core region (1), which is lower than the spatial overlap of a fundamental mode with the core region (1), wherein the inner structure (4) is formed by channels mainly extending in fibre length direction, wherein the ratio of the diameter d of the channels to the centre distance Λ of adjacent channels is less than 0.5, preferably less than 0.3, wherein the centre distance Λ is greater than 20 times the wavelength of an electromagnetic radiation propagating in the fibre, wherein the diameter (3) of the outer region is selected such that the fundamental mode has a spatial overlap with the core region (1) that is at least 25% greater than all other modes of the electromagnetic radiation propagating in the double-sheath fibre, **characterised in that** the inner structure (4) consists of two concentric rings of hexagonally arranged channels, wherein the core region (1) is formed by the absence of a channel.

2. Double-sheath fibre according to claim 1, **characterised in that** the core region (1) is doped with rare earth.

3. Use of a double-sheath fibre according to claim 1 or 2 in a laser system, in particular in a fibre laser system.

4. Laser system, in particular a fibre laser system, having a double-sheath fibre according to claim 1 or 2.

## Revendications

1. Fibre à double gaine avec une zone de noyau (1) et une zone de gaine, la zone de gaine présentant une zone intérieure (2) et une zone extérieure (3) avec un indice de réfraction plus faible par rapport à la zone intérieure (2) et à la zone de noyau (1), la zone extérieure (3) entourant la zone intérieure (2), la zone intérieure (2) présentant une structure intérieure (4) qui provoque un chevauchement spatial de modes d'ordre supérieur avec la zone de noyau (1), qui est inférieur au chevauchement spatial d'un mode de base avec la zone de noyau (1), la structure intérieure (4) étant formée par des canaux s'étendant essentiellement dans la direction longitudinale de la fibre, le rapport du diamètre d des canaux à l'espacement central Λ de canaux voisins étant inférieur à 0,5, de préférence inférieur à 0,3, l'espacement central Λ étant supérieur à 20 fois la longueur d'onde d'un rayonnement électromagnétique se propageant dans la fibre,
le diamètre (3) de la zone extérieure étant choisi de telle sorte que le mode de base présente un chevauchement spatial avec la zone de noyau (1) supérieur d'au moins 25 % à tous les autres modes du rayonnement électromagnétique se propageant dans la fibre à double gaine, **caractérisé en ce que** la structure intérieure (4) consiste en deux anneaux concentriques de canaux agencés en hexagone, la zone de noyau (1) étant formée par l'absence d'un canal.

2. Fibre à double gaine selon la revendication 1, **caractérisée en ce que** la zone de noyau (1) est dopée avec des terres rares.

3. Utilisation d'une fibre à double gaine selon la revendication 1 ou 2 dans un système laser, notamment dans un système laser à fibre.

4. Système laser, notamment système laser à fibre, présentant une fibre à double gaine selon la revendication 1 ou 2.
